# EUROPÄISCHE PATENTSCHRIFT

(11) **EP 1 650 169 B1**
(45) Veröffentlichungstag und Bekanntmachung des Hinweises auf die Patenterteilung: **06.12.2006**
(21) Anmeldenummer: 04023676.2
(22) Anmeldetag: 05.10.2004
(51) Int. Cl.: C02F 3/12

(54) **Biologische Klärvorrichtung mit einer Tauchpumpe**
Biological clarification device with a submersible pump
Dispositif de clarification biologique avec une pompe immergée

(43) Veröffentlichungstag der Anmeldung: 26.04.2006
(73) Patentinhaber: Baumann, Markus, 32602 Vlotho (DE)
(72) Erfinder: Baumann, Markus, 32602 Vlotho (DE)
(74) Vertreter: Steinmeister, Helmut

(56) Entgegenhaltungen:
- EP-A- 1 300 367
- DE-U1- 20 020 795
- US-A- 5 234 580

## Beschreibung

Die Erfindung betrifft eine biologische Klärvorrichtung mit wenigstens einer Vorklärkammer und wenigstens einer Klärkammer, mit Pumpeinrichtungen für den Transport und die Behandlung von Abwasser einschließlich eines Belüfters.

Die Erfindung befaßt sich mit Kleinkläranlagen und kleinen Kläranlagen, die häufig durch Nachrüstung herkömmlicher Dreikammergruben gebildet werden. Die einzelnen Kammern derartiger Dreikammerbehälter können unter anderem als Absetz- oder Vorklärkammer und als eigentliche Klärkammer zur biologischen Klärung des Wasser verwendet werden. Anlagen dieser Art weisen eine Anzahl von Pumpen auf, zu denen eine Klarwasser-Entnahmepumpe, eine Schlammpumpe zur Rückführung von Schlamm aus der Klärkammer in die Vorklärkammer, ein Belüfter, etc. gehören. Darüber hinaus können weitere Pumpen vorhanden sein, die das Abwasser während des Klärvorganges transportieren und behandeln, z. B. belüften oder, bei Verwendung weiterer Kammern, von einer Kammer zur anderen pumpen.

Eine große Anzahl von Pumpen erfordert erhebliche Kosten sowohl für die Anschaffung als auch für die anschließende Wartung während des Betriebes. Kostspielig ist auch die Herstellung von Verkabelungen der Pumpen und die Steuerung der Pumpen. Anlagen dieser Art werden daher insgesamt verschleiß- und störungsanfällig.

Die DE 200 20 795 U1 des Anmelders zeigt und beschreibt eine Vorrichtung zum Behandeln von Abwasser in Kleinkläranlagen mit einer Anzahl von Aggregaten einschließlich eines Belüfters, einer Klarwasser-Entnahmepumpe und einer Schlammpumpe, die in einem Klärbehälter angeordnet sind.

Der Erfindung liegt die Aufgabe zugrunde, eine Klärvorrichtung der obigen Art zu schaffen, bei der eine der Pumpen eingespart werden kann.

Diese Aufgabe wird erfindungsgemäß dadurch gelöst, daß in der Klärkammer eine Tauchpumpe für die Klarwasserentnahme vorgesehen ist, deren Auslaß in einen aufsteigenden Zylinder mündet, in dem sich eine Ventilkugel befindet, dass am oberen Ende des Zylinders ein Ventilsitz für die Ventilkugel vorgesehen ist, dass der Zylinder im Anschluß an den Ventilsitz in eine Schlammrückführungsleitung übergeht, die zur Vorklärkammer und in dieser unter den Minimal-Wasserspiegel führt, und dass von dem Zylinder eine zum Klarwasser-Auslaß führende Zweigleitung ausgeht.

Die EP 1 388 524 A1 beschreibt bereits ein vergleichbares Verfahren und eine entsprechende Vorrichtung, die es gestatten, mithilfe nur einer Pumpe die Belüftung des Belebungsbeckens oder Klärbeckens, die Schlammrückführung und die Klarwasserentnahme durchzuführen. Der Lösungsweg weicht jedoch erheblich von dem hier vorgeschlagenen Lösungsweg ab.

Der hier verwendete Ausdruck "Zylinder" ist nicht im streng geometrischen Sinn zu verstehen. In Betracht kommt jede Gefäßform, bei der die Ventilkugel von unten nach oben gegen den Ventilsitz aufsteigen kann.

Die im vorliegenden Zusammenhang angesprochene "Schlammrückführungsleitung" ist eine Leitung, die eine Verbindung von der Klärkammer über die zwischen den Kammern liegende Trennwand hinweg in die Vorklärkammer herstellt. Sie kann daher zur Schlammrückführung benutzt werden, und dies ist gemäß der vorliegenden Erfindung auch vorgesehen. Andererseits dient sie bei ihrer erfindungsgemäßen Verwendung auch als Beschickungsleitung zur Überführung von Wasser aus der Vorklärkammer in die Klärkammer. Dies soll durch die Bezeichnung "Schlammrückführungsleitung" keineswegs ausgeschlossen werden. Es handelt sich also um eine Leitung mit Doppelfunktion, die nach nur einer ihrer Funktionen bezeichnet wird.

In der Klärkammer von Kläranlagen der hier beschriebenen Art laufen in zeitlicher Reihenfolge verschiedene Phasen ab. Während einer Belüftungsphase wird Luft und damit Sauerstoff in die Klärkammer eingeblasen. Zu diesem Zweck gibt es am Boden der Kammer liegende Belüftungseinrichtungen oder auch Belüftungspumpen, die im oberen Bereich der Kammer angeordnet werden und einen scharfen Luftstrahl nach unten abgeben. Während der Belüftungsphase wird der gesamte Kammerinhalt stark bewegt. Der aufgenommene Luftsauerstoff wird von aeroben Bakterien benötigt, die für den Klärvorgang notwendig sind. Nach der Belüftungsphase folgt im allgemeinen eine Absetzphase, in der alle Pumpen ausgeschaltet sind und schwebende Schmutzteilchen zum Boden sinken. Am Ende dieser Absetzphase ist das Wasser zumindest im oberen Bereich der Klärkammer weitgehend klar, so dass jetzt eine Klarwasser-Entnahmepumpe eingeschaltet werden kann, die das Wasser über den Klarwasser-Auslaß abgibt.

Im übrigen ist es üblich, aus der Klärkammer schlammhaltiges Abwasser von Zeit zu Zeit in begrenzten Mengen in die Vorklärkammer zurückzuführen und auf diese Weise zusammen mit dem Schlamm Mikroorganismen in die Vorklärkammer zurückzuführen, die sich während der Behandlung in der Klärkammer gebildet bzw. vermehrt haben. Schließlich muß das in der Vorklärkammer gesammelte Schmutzwasser von Zeit zu Zeit portionsweise in die Klärkammer überführt werden. Auch dieser Vorgang erfordert eine Pumpe.

Erfindungsgemäß wird beim Einschalten der erwähnten Pumpe Wasser in den Zylinder eingefüllt, das die Ventilkugel nach und nach anhebt, bis sie gegen den Ventilsitz trifft. Dabei können relativ geringe Wassermengen in die Zweigleitung gelangen, die zum Klarwasser-Auslaß führt.

Da jedoch die Laufzeit der Pumpe bis zum Füllen des Zylinders relativ gering sind, sind auch die in die Zweigleitung eingetretenen Wassermengen angesichts des erheblich geringeren Querschnitts der Zweigleitung gegenüber dem Zylinder gering, so dass sie in der Regel nicht bis zum Klarwasser-Auslaß gelangen, sondern nach dem Abschalten der Pumpe in die Klärkammer zurücklaufen.

Wenn die Ventilkugel auf den Ventilsitz getroffen ist und die Pumpe dementsprechend ausgeschaltet ist, befindet sich in der Schlammrückführungsleitung einschließlich des Zylinders über die Trennwand oder die Trennwände zwischen den beiden Kammern hinweg eine durchgehende Wassersäule.

Da sich in der Vorklärkammer stets ein höherer Wasserspiegel befindet als in der Klärkammer, wird aufgrund der längeren Wassersäule auf der Seite der Klärkammer Wasser aus der Vorklärkammer in die Klärkammer gesaugt, ohne dass der Einsatz einer Pumpe erforderlich ist.

Wenn die Überführung von Schmutzwasser aus der Vorklärkammer in die Klärkammer beendet ist und eine Behandlungs- und Absetzphase gefolgt ist, kann die Pumpe wiederum eingeschaltet werden. Sie füllt dabei wiederum den Zylinder, bis die Ventilkugel gegen den Ventilsitz trifft. In dieser Betriebsphase schaltet die Pumpe jetzt nicht ab, sondern läuft weiter.

Daher wird Klarwasser über die Zweigleitung in den Klarwasser-Auslaß gepumpt. Bei diesem Vorgang gelangt zwar auch etwas Klarwasser in die Vorklärkammer zurück, aber diese Menge ist im Verhältnis zu den gesamten Mengen gering.

Vorzugsweise ist in der zum Auslaß führenden Zweigleitung ein Pufferbehälter vorgesehen, so dass geringe Wassermengen, die unbeabsichtigt in die Zweigleitung gelangen, nicht bis zum Klarwasser-Auslaß vordringen können und bei der nächsten Gelegenheit in die Klärkammer zurücklaufen.

Entsprechend einer bevorzugten Ausführungsform ist in der Klärkammer eine nach unten offene Auffangschale vorgesehen, die über eine relativ dünne Leitung mit der Schlammrückführungsleitung verbunden ist. Diese Auffangschale fängt Luftblasen auf, die von der Belüftungsvorrichtung abgegeben worden sind und im Wasser aufsteigen.

Wenn sich eine bestimmte Luftmenge angesammelt hat und in die Schlammrückführungsleitung eingedrungen ist, wird die für die Überführung des Wassers in die Klärkammer notwendige Wassersäule unterbrochen und die Wasserüberführung beendet.

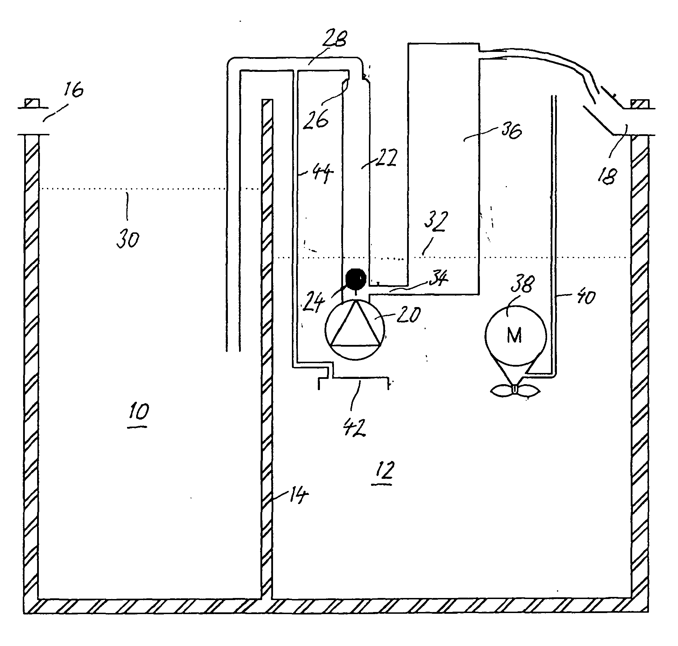

Im folgenden werden bevorzugte Ausführungsbeispiele der Erfindung anhand der beigefügten Zeichnung näher erläutert.

Die einzige Figur zeigt einen senkrechten Schnitt durch eine erfindungsgemäße Klärvorrichtung.

Die erfindungsgemäße Vorrichtung ist dargestellt beispielsweise in Verbindung mit einer herkömmlichen Dreikammergrube, die eine Vorklärkammer 10 und eine Klärkammer 12 umfaßt.

Die in der Regel vorhandene dritte Kammer ist nicht gezeigt. Sie kann als zusätzliche Vorklärkammer oder auch als Teil der Klärkammer verwendet werden. Zwischen den beiden Kammern 10,12 befindet sich eine schraffiert dargestellte Trennwand 14. In die Vorklärkammer 10 tritt ein Einlaß 16 ein. In der Wand der Klärkammer befindet sich ein Auslaß 18 für Klarwasser.

In der Klärkammer 12 ist unterhalb des Wasserspiegels eine Pumpe 20 angeordnet, deren Auslaß unmittelbar mit einem aufsteigenden, über den Wasserspiegel der Klärkammer hinausragenden Zylinder 22 verbunden ist. In dem Zylinder befindet sich eine Ventilkugel 24, deren Durchmesser geringer ist als der Innendurchmesser des Zylinders 22 und die daher den Wasserdurchgang bei Einschalten der Pumpe 20 nicht nennenswert behindert. Erst wenn die Ventilkugel 24 mit dem von der Pumpe zugeführten Wasser ans obere Ende des Zylinders aufgestiegen ist, trifft sie gegen einen Ventilsitz 26, so dass das Ende des Zylinders verschlossen wird.

Stromabwärts des Ventilsitzes 26 befindet sich eine Schlammrückführungsleitung 28, die sich über die Trennwand 14 hinweg auf die Seite der Vorklärkammer 10 und hier bis unterhalb des Wasserspiegels erstreckt. Der Wasserspiegel in der Klärkammer 10 soll mit 30 und derjenigen der Klärkammer 12 mit 32 bezeichnet werden. Der Wasserspiegel in der Vorklärkammer ist stets höher als derjenige in der Klärkammer 12.

Vom unteren Bereich des Zylinders 22 geht eine Zweigleitung 34 aus, die mit einem Pufferbehälter 36 und über diesen mit dem Klarwasser-Auslaß 18 verbunden ist.

Im übrigen befindet sich in dem Klärbehälter 12 ein Tauchbelüfter 38, der über eine Luftleitung 40 mit der Umgebung verbunden ist.

Schließlich ist im Klärbehälter unterhalb des Wasserspiegels eine Auffangschale angeordnet, die nach unten offen ist. Diese Auffangschale 42 ist über eine relativ dünne Leitung 44 mit dem oberen Bereich der Schlammrückführungsleitung 28 verbunden.

Die in der Zeichnung dargestellte Klärvorrichtung arbeitet wie folgt:

Wenn sich in der Vorklärkammer 10 eine größere Menge Schmutzwasser angesammelt hat und aus der Klärkammer 12 Klarwasser abgepumpt worden ist, soll zusätzliches Wasser aus der Vorklärkammer in die Klärkammer überführt werden. Um dies zu veranlassen, wird die Pumpe 20 eingeschaltet.

Wasser aus der Klärkammer steigt in dem Zylinder 22 auf und gelangt weiter in die Schlammrückführungsleitung bis in die Vorklärkammer. Wenn die Ventilkugel 24 an dem oberen Ventilsitz 26 eingetroffen ist, wird der Übergang von Wasser in die Vorklärkammer beendet. Die Pumpe kann abgeschaltet werden. Nunmehr führt die über die Trennwand 14 hinweggehende zusammenhängende Wassersäule dazu, dass Wasser aus der Vorklärkammer 10 durch Schwerkraft in die Klärkammer 12 hinübergezogen wird. Während des Laufs der Pumpe 20 ist auch etwas Wasser in die Zweigleitung 34 mit dem Pufferbehälter 36 gelangt. Da die Pumpe 20 jedoch nur relativ kurze Zeit laufen muß, wird der Pufferbehälter 36 nicht annähernd gefüllt, so dass das eingetretene Wasser nach dem Ausschalten der Pumpe zurücklaufen kann.

Kurz nach Beginn bzw. nach der Überführung von Wasser aus der Vorklärkammer 10 in die Klärkammer 12 läuft der Tauchbelüfter 38. Dieser schickt einen Luftstrahl bzw. einen Luft-Wasser-Strahl in Richtung des Bodens der Klärkammer. Luftblasen steigen von unten auf und sammeln sich u. a. in der Auffangschale 42.

Diese Luftblasen treten durch die Leitung 44 nach oben aus der Auffangschale 42 aus und gelangen in die Schlammrückführungsleitung 28. Dadurch wird die geschlossene Wassersäule unterbrochen, und der Transport von Schmutzwasser aus der Vorklärkammer 10 in die Klärkammer 12 wird beendet.

Nachdem auch die Belüftung beendet worden ist und eine Absetzphase stattgefunden hat, ist im oberen Bereich der Klärkammer eine Zone weitgehend klaren Wassers entstanden. Die Pumpe 20 wird wieder eingeschaltet und füllt zunächst wiederum den Zylinder 22, bis die Ventilkugel 24 auf den Ventilsitz 26 getroffen ist. Dabei gelangt naturgemäß eine geringe Wassermenge aus der Klärkammer in die Vorklärkammer, bis die Ventilkugel 24 den Ventilsitz 26 erreicht hat.

Diese Menge ist aber wegen ihrer Geringfügigkeit vernachlässigbar. Wenn die Pumpe weiter läuft, strömt das Wasser durch die Zweigleitung 34, den Pufferbehälter 36 und den Klarwasser-Auslaß 18 in einen Vorfluter oder dergleichen.

Die Pumpe 20 kann solange in Betrieb gehalten werden, bis die gewünschte Klarwassermenge den Auslaß 18 verlassen hat. Anschließend beginnt das Verfahren von neuem.

## Patentansprüche

1. Biologische Klärvorrichtung mit wenigstens einer Vorklärkammer (10) und wenigstens einer Klärkammer (12), mit Pumpeinrichtungen (20) für den Transport und die Behandlung von Abwasser einschließlich eines Belüfters (38), **dadurch gekennzeichnet, dass** in der Klärkammer (12) eine Tauchpumpe (20) für die Klarwasserentnahme vorgesehen ist, deren Auslaß in einen aufsteigenden Zylinder (22) mündet, in dem sich eine Ventilkugel (24) befindet, dass am oberen Ende des Zylinders ein Ventilsitz (26) für die Ventilkugel (24) vorgesehen ist, dass der Zylinder (22) im Anschluß an den Ventilsitz (26) in eine Schlammrückführungsleitung (28) übergeht, die zur Vorklärkammer (10) und in dieser unter den Minimal-Wasserspiegel führt, und dass von dem Zylinder (22) eine zum Klarwasser-Auslaß(18) führende Zweigleitung (34) ausgeht.

2. Klärvorrichtung nach Anspruch 1, **dadurch gekennzeichnet, dass** in die zum Klarwasser-Auslaß (18) führende Zweigleitung (34) ein Pufferbehälter (36) integriert ist.

3. Klärvorrichtung nach Anspruch 1 oder 2, **dadurch gekennzeichnet, dass** in der Klärkammer (12) unterhalb des Minimal-Wasserspiegels eine nach unten offene Auffangschale (42) vorgesehen ist, die über eine Leitung (44) mit der Schlammrückführungsleitung (28) in Verbindung steht.

## Claims

1. Biological clarification device having at least one preclarifying chamber (10) and at least one clarifying chamber (12), having pump devices (20) for transporting and processing waste water including a ventilator (38), **characterised in that** there is provided in the clarifying chamber (12) a submersible pump (20) for discharging the clarified water whose outlet opens in an ascending cylinder (22), in which a valve ball (24) is located, **in that**, at the upper end of the cylinder, a valve seat (26) is provided for the valve ball (24), **in that** the cylinder (22) merges, downstream of the valve seat (26), with a slurry return line (28) which leads to the preclarifying chamber (10) and below the minimum water level therein, and **in that** a branch line (34) which leads to the clarified water outlet (18) starts from the cylinder (22).

2. Clarifying device according to claim 1, **characterised in that** a buffer container (36) is integrated in the branch line (34) which leads to the clarified water outlet (18).

3. Clarifying device according to claim 1 or 2, **characterised in that** a downwardly open collection dish (42) is provided below the minimum water level in the clarifying chamber (12) and is connected to the slurry return line (28) via a line (44).

## Revendications

1. Dispositif de clarification biologique avec au moins une chambre de préclarification (10) et au moins une chambre de clarification (12), avec des dispositifs de pompage (20) pour le transport et le traitement des eaux usées y compris un aérateur (38), **caractérisé en ce que** dans la chambre de clarification (12) est prévue une pompe immergée (20) pour le prélèvement de l'eau clarifiée, dont la sortie débouche dans un cylindre (22) ascendant dans lequel se trouve une bille de soupape (24), **en ce qu'**à l'extrémité supérieure du cylindre est prévu un siège de soupape (26) pour la bille de soupape (24), **en ce que** le cylindre (22) se raccorde, à la suite du siège de soupape (26), à une conduite de retour de boues (28) qui mène à la chambre de préclarification (10) et dans celle-ci sous le niveau d'eau minimal, et **en ce que** du cylindre (22) part une conduite dérivée (34) qui mène à la sortie d'eau clarifiée (18).

2. Dispositif de clarification selon la revendication 1, **caractérisé en ce que** dans la conduite dérivée (34), menant à la sortie d'eau clarifiée (18), est intégré un réservoir tampon (36).

3. Dispositif de clarification selon la revendication 1 ou 2, **caractérisé en ce que** dans la chambre de clarification (12), sous le niveau d'eau minimal, est prévu un bac de collecte (42) ouvert vers le bas qui communique par une conduite (44) avec la conduite de retour de boues (28).
